# EUROPEAN PATENT APPLICATION

(11) **EP 3 029 543 A1**
(43) Date of publication of application: **08.06.2016**
(21) Application number: 15197590.1
(22) Date of filing: 02.12.2015
(51) Int. Cl.: G06F 1/16, F16M 13/02, H05K 5/02

(54) **MOUNTABLE CASE ASSEMBLY**

(30) Priority: 02.12.2014 US 201462086591 P; 08.01.2015 US 201562101114 P; 05.03.2015 US 201514639799
(71) Applicant: Aevoe International Ltd., Tortola (VG)
(72) Inventor: Yao, Cheng-Wei, 115 Taipei City (TW); Chiang, Huai-Shun, 238 New Taipei City (TW)
(74) Representative: Holme Patent A/S

(57) **Abstract**

A mountable case assembly (500, 800, 900) for protecting and securing a portable electronic device. The mountable case assembly (500, 800, 900) includes a mountable case (100) to receive the portable electronic device. The mountable case assembly (500, 800, 900) includes one or more coupling components for detachably coupling a mountable case (100) with a mounting plate (300). The mountable case (100) and the mounting plate (300) can be physically coupled and/or magnetically coupled. The mountable case (100) can be detachably coupled to a hinge assembly (502). The hinge assembly (502) is detachably coupled to a wall mount (504) which can be coupled to a flat surface.

## Description

The present disclosure generally relates to a protective apparatus, and more specifically to a protective apparatus for protecting the surfaces of a portable electronic device as well as to provide mountable engagement with a surface for operation and/or viewing of the portable electronic device.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

The term "coupled" is defined as connected, whether directly or indirectly through intervening components, and is not necessarily limited to physical connections. The connection can be such that the objects are permanently connected or releasably connected. The term "magnetic" is defined as magnetized or capable of being magnetized. The term "magnet" refers to a material that produces a magnetic field and is able to attract magnetic materials including, but not limited to, ferromagnetic materials, plastic magnets, and electromagnets. The term "substantially" is defined to be essentially conforming to the particular dimension, shape or other word that substantially modifies, such that the component need not be exact. For example, substantially rectangular means that the object in question resembles a rectangle, but can have one or more deviations from a true rectangle.

Over time, users are increasingly using their portable electronic devices and process more data than in the past. As portable electronic devices become more common place in daily life, users of these devices have sought ways to protect them from damage and look for easier means to access their portable electronic devices. Conventional cases typically do not assist users in holding their portable electronic devices.

The present disclosure relates to a mountable case assembly for protecting and mounting a personal electronic device. The mountable case assembly can include a mountable case configured to securely receive a portable electronic device to protect the portable electronic device. When the mountable case is coupled to a base, the portable electronic device can be easier to use compared to conventional protective cases.

The mountable case can be made from a suitable material to protect the personal electronic device from damage due to scratching, dropping, wear and tear, or the like. The mountable case can include one or more coupling components configured to detachably engage with one or more corresponding coupling component of a base assembly.

When the mountable case is engaged with the base assembly, a user can adjust the mountable case with respect to the base assembly to change the angling of the mountable case. The mountable case and/or a base plate of the base assembly can magnetically and/or physically couple the mounting case with the base assembly. The coupling components can include a protrusion with flanges to engage with one or more corresponding flange retention portions to assist in physically securing the mountable case with the base assembly. The coupling components can include a plurality of magnetic elements and a corresponding magnetic component to assist in magnetically securing the mountable case with the base assembly.

### BRIEF DESCRIPTION OF THE DRAWINGS

Figure 1 is an isometric rear view of a mountable case in accordance with an exemplary embodiment;
Figure 2 is a rear view of a mountable case in accordance with an exemplary embodiment;
Figure 3 is an exploded view of a mounting plate in accordance with an exemplary embodiment;
Figure 4 is an isometric view of an assembled mounting plate in accordance with an exemplary embodiment;
Figure 5 is an isometric view of a mountable case assembly in a portrait orientation in accordance with an exemplary embodiment;
Figure 6 is an isometric view of a mountable case assembly in a landscape orientation in accordance with an exemplary embodiment;
Figure 7 is an exploded view of a wall mount assembly in accordance with an exemplary embodiment;
Figure 8 is an isometric view of an assembled wall mount assembly in accordance with an exemplary embodiment;
Figure 9 is an exploded view of a mountable case assembly in accordance with a first exemplary embodiment; and
Figure 10 is an exploded view of an alternate mountable case assembly in accordance with an exemplary embodiment.

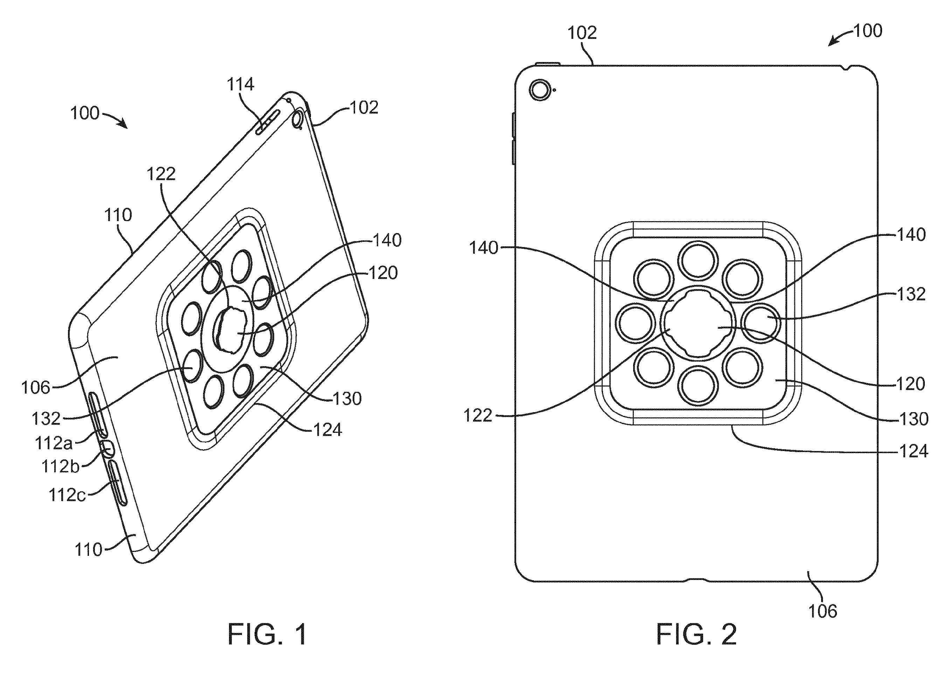

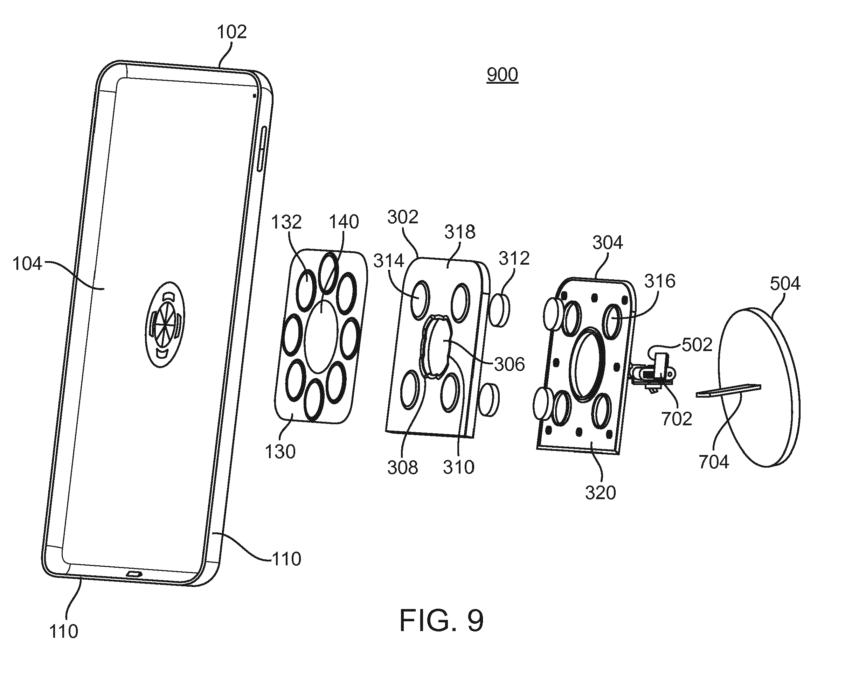

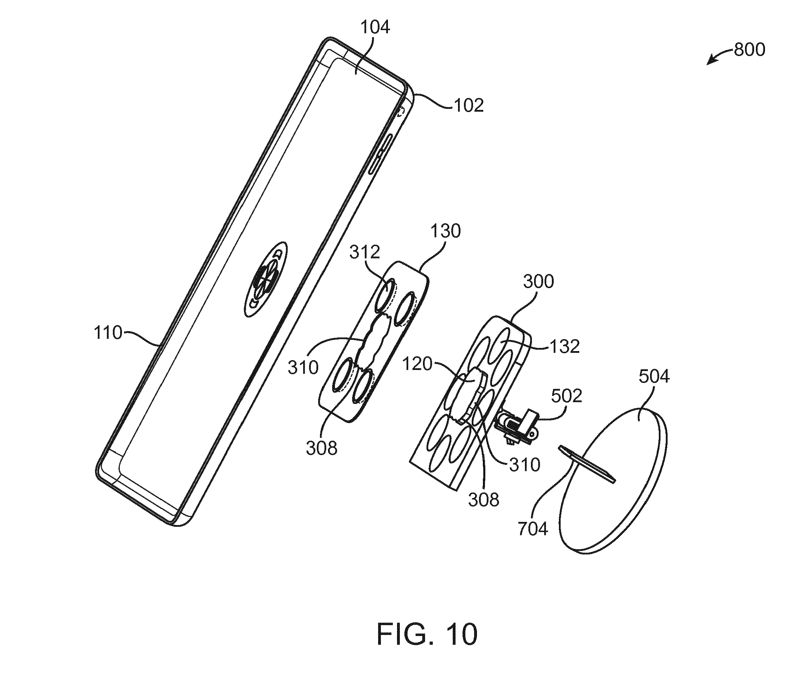

Referring to Figures 1 and 2, a mountable case in accordance with an exemplary embodiment are illustrated. The mountable case 100 can receive and secure a portable electronic device. For example, the portable electronic device can be a tablet such as an iPad^{®} or HP^{®} Slate, a smartphone such as an iPhone^{®} or Samsung^{®} Galaxy™, a portable digital assistant (PDA), a laptop, e-book, or the like. The mountable case 100 is made from a strong, durable material configured to protect the portable electronic device from damage. The mountable case 100 includes a housing 102. The housing 102 can be made of plastic, or alternatively a non-magnetic metal, such as aluminum. The housing 102 includes a front face 104 (shown in Figures 9 and 10) and a back face 106, opposed to the front face 104. The front face 104 can include a soft or plush lining (not shown) to assist in preventing scratching of the outer surface of a portable electronic device. The housing 102 includes a plurality of retention portions 110 on the outside edge or side of the front face 104. The plurality of retention portions 110 can receive a portable electronic device and secure the portable electronic device to the mountable case 100. The plurality of retention portions 110 are sufficiently flexible to allow the portable electronic device to snap in and are sufficiently firm to retain the portable electronic device when engaged.

Alternatively, other retention means as known in the art can be used. As shown, the plurality retention portions 110 extend the entire length of each edge or side of the housing 102. Alternatively, the plurality of retention portions 110 can extend only a portion of each edge or side, or the plurality of retention portions 110 can be located intermittently on the edge or side of the housing 102.

The portable electronic device can have exterior user interfaces that may need to be accessible when the portable electronic device is secure to the mountable case 100. These interfaces can include, but are not limited to, a camera button(s), volume button(s), power port, microphone, speaker, headphone jack, and silence button. The retention portions 110 can include one or more apertures 112a, 112b, 112c and/or one or more button covers 114 to accommodate the use of these interfaces when the portable electronic device is secured to the mountable case 100. The location of the one or more apertures 112a, 112b, 112c and/or one or more button covers 114 can be device specific or universal to accommodate an array of portable electronic devices. The one or more apertures 112a, 112b, 112c provide an opening to allow the interface to be accessible. The one or more button covers 114 can be made of a flexible material, such as rubber, to allow the corresponding button to be activated when the portable electronic device is engaged in the mountable case 100.

As shown, a coupling component includes a mount protrusion 120 which extends outward from the back face 106 of the housing 102. The mount protrusion 120 includes one or more flanges 122. Each flange 122 is formed on an outer peripheral edge of the mount protrusion 120 and extends radially toward the periphery of the housing 102. Each flange 122 extends a distance from the protrusion 120 thus forming a space beneath each flange 122. The mount protrusion 120 includes four flanges 122 which are offset from each adjacent flange 122 by ninety degrees (90°). Alternatively, the number of flanges 122, the shape of each flange 122 and the offset angle can vary.

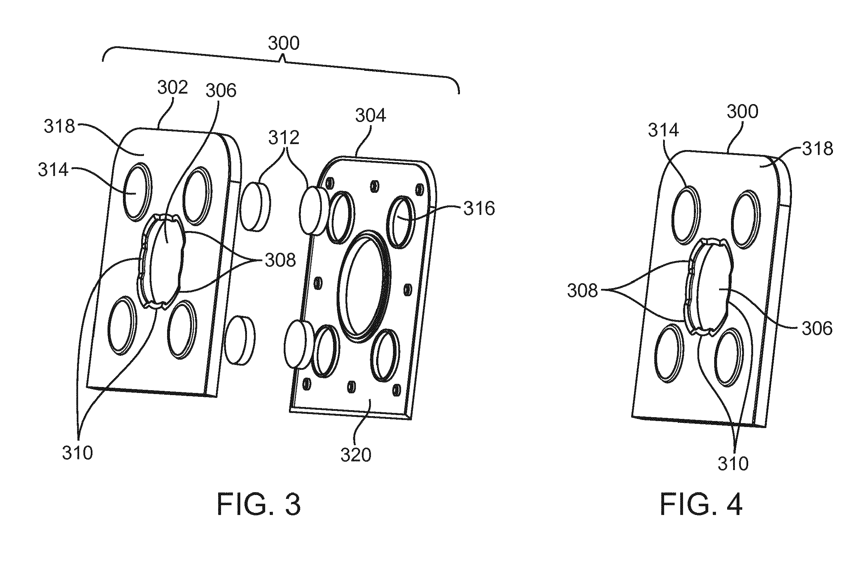

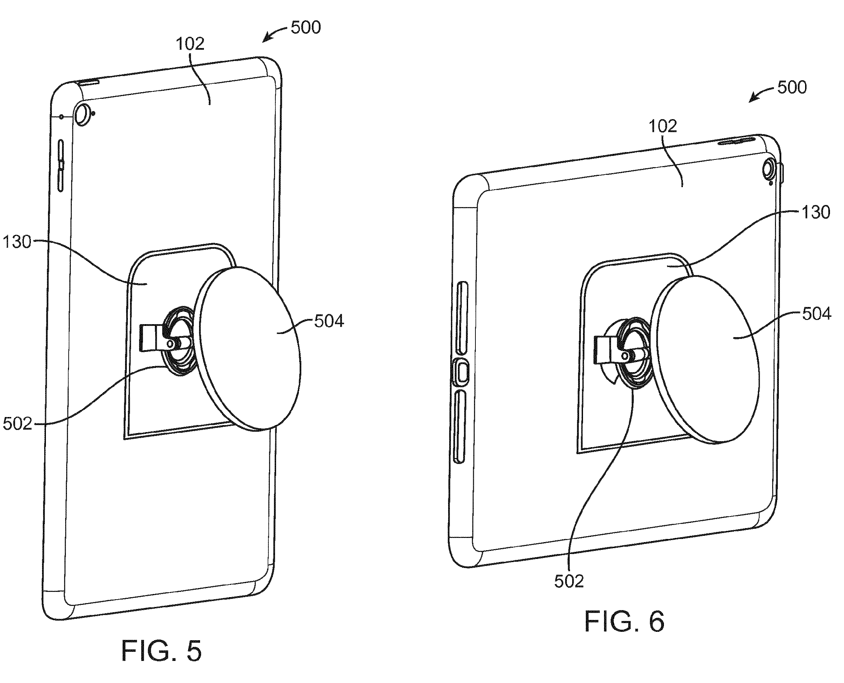

As explained below, each flange 122 can engage with a corresponding flange retention portion 310 on a mounting plate 300 (shown in Figures 3 and 4) to secure the mountable case 100 to a mounting plate 300 of a base assembly 500 (shown in Figures 5 and 6). For example, during engagement, the flanges 122 slide beneath a corresponding flange retention portion 310 thus preventing lifting of the mounting plate 300 from the mountable case. The mount protrusion 120 extends through a protrusion aperture 140 formed in a magnetic plate 130 and extends beyond the outer surface of the magnetic plate 130.

As shown, a coupling component includes a magnetic plate 130 configured to engage with one or more corresponding magnetic elements 312 (shown in Figures 3 and 4) to secure the mountable case 100 to a mounting plate 300 of a base assembly 500 (shown in Figures 5 and 6) magnetically. The magnetic plate 130 can be secured to the back face 106 of the housing 102. The back face 106 can include a plate depression 124 configured to receive the magnetic plate 130. The magnetic plate 130 can be secured to the back face 106 using one or more known securement means known in the art. For example, an adhesive can permanently couple the magnetic plate 130 with the housing 102. Alternatively, one or more fasteners, such as screws, can secure the magnetic plate 130 to the back face 106. Alternatively, the magnetic plate 130 can be integrally formed within the plate depression 124 and/or in the back face 106.

The magnetic plate 130 is a suitable magnetic material including, but not limited to, a ferromagnetic plate, plastic magnetic plate or ferrous metal plate, such as a steel plate, or any combination thereof. The magnetic plate 130 can form a plurality of plate apertures 132. Each plate aperture 132 can receive a corresponding magnetic element 312 of the mounting plate 300 (shown in Figures 3 and 4). As shown, the plurality of plate apertures 132 together form a substantially circular shape and each plate aperture 132 is offset forty-five degrees (45°) from an adjacent plate aperture 132. Alternatively, the plurality of plate apertures 132 can vary in number, shape, arrangement and/or offset angles.

Referring to Figures 3 and 4, a mounting plate in accordance with an exemplary embodiment are illustrated. As shown in Figure 3, the mounting plate 300 can include a first plate 302 and a second plate 304. As shown in Figure 4, the first plate 302 and second plate 304 are assembled or coupled together to form the mounting plate 300.

The first plate 302 can form a mounting plate aperture 306 configured to receive the mount protrusion 120 of the mountable case 100. The mounting plate aperture 306 can form alternating flange receiving portions 308 and flange retention portions 310. Each flange receiving portion 308 can be shaped to receive a corresponding flange 122. Each flange retention portion 310 can be shaped to retain a corresponding flange 122 when the mount protrusion 120 is received via the flange receiving portion 310 and the mounting case 100 is rotated clockwise or counterclockwise. For example, the mountable case 100 can be rotated less than ninety degrees (90°) in either the clockwise or counterclockwise direction, during which, the flanges 122 can slide beneath the corresponding flange retention portion 310, thus preventing removal.

To disengage the flanges 122 from the flange retention portions 310, the mountable case 100 can be rotated clockwise or counterclockwise to move the flanges 122 from beneath the flange retention portions 310 and align each of the flanges 122 with a corresponding flange receiving portion 308.

The flange receiving portions 308 are essentially open apertures thereby permitting lifting of the flanges 122 therefrom. The number of flange receiving portions 308 and flange retaining portions 310 can correspond to the number of flanges 122.

The first plate 302 includes a plurality of magnetic element covers 314. Each magnetic element cover 314 can receive a magnetic element 312 extending from the second plate 304. Each magnetic element cover 314 can extend from an outermost surface 318 of the mounting plate 300.

The second plate 304 can include a plurality of magnetic element receiving depressions 316 with each magnetic element receiving depression 316 configured to receive a magnetic element 312. As shown, there are four magnetic element receiving depressions 316. However the number of magnetic element receiving depressions 316 can vary.

Each magnetic element 312 can be coupled with a corresponding magnetic element receiving depression 316 via a coupling means as known in the art. For example, the coupling means can be an adhesive, one or more retention pieces or using other suitable fastening means know in the art. The magnetic elements 312 can be made of any suitable magnetic material, and can be for example, a magnet. Each magnetic element 312 extends beyond a top surface 320 of the second plate 304. The size, shape, strength and quantity of magnetic elements 312 can vary and depend on the required magnetic attraction to secure the mountable case 100 with the mounting plate 300. A heavier portable electronic device can require additional magnetic attraction to secure the mountable case 100 compared to a lighter portable electronic device.

The first plate 302 can be coupled with the second plate 304 via a coupling means known in the art. For example, the coupling means can include welding, snap in components or any other suitable fastening means known in the art. Alternatively, the mount plate 300 can be formed as a single piece with the plurality of magnetic elements 312 disposed within the mounting plate 300.

Referring to Figures 5 and 6, mountable case assemblies in accordance with exemplary embodiments are illustrated. As shown in Figures 5 and 6, the mountable case assemblies 500 can be in a portrait orientation and a landscape orientation, respectively.

The mountable case assembly 500 can include the mountable case 100 coupled to a hinge assembly 502 which is coupled to a base mount 502. When the mountable case 100 is coupled to the mounting plate 300, each of the four magnetic element covers 314 are received and reside in one of the eight plate apertures 132. As the mountable case 100 is rotated relative to the mounting plate 300, the magnetic element covers 314 can move from one plate aperture 132 to the next adjacent plate aperture 132. As a result, the mountable case 100 can be positioned in eight different orientations relative to the mounting plate 300. In four alternating orientations, the flanges 122 and the flange retention portions 310 can be lockingly engaged, thereby preventing removal of the mountable case 100 from the mounting plate 300. In four oppositely alternating orientations, the flanges 122 and the flange retention portions 310 are free of engagement, thereby allowing removal of the mountable case 100 from the mounting plate 300. In an unlocked orientation, the mountable case 100 and the mounting plate 300 can be coupled together by magnetic attraction, though they can be separated with an intervening force.

The magnetic element covers 314 and the plate apertures 132 are located such that the mountable case 100 can be coupled to the mounting plate 300 in a landscape orientation or in a portrait orientation. The number of locked and unlocked arrangements and their respective orientations depends on the number of flanges 122 and the number of flange retention portions 310.

The mountable case assembly 500 can include the hinge assembly 502 and a wall mount 504 which preferably is substantially planar. The hinge assembly 502 can allow adjustment between varying viewing angles of the mounting case 100 while secured with the mounting plate 300 of the mountable case assembly 500. The hinge assembly 502 can have a single axis of rotation allowing the mounting case 100 to be tilted with respect to a wall mount 504. The wall mount 504 can secure the mountable case assembly 500 to a substantially planar surface such as a wall, shelf, door or the like, as explained below.

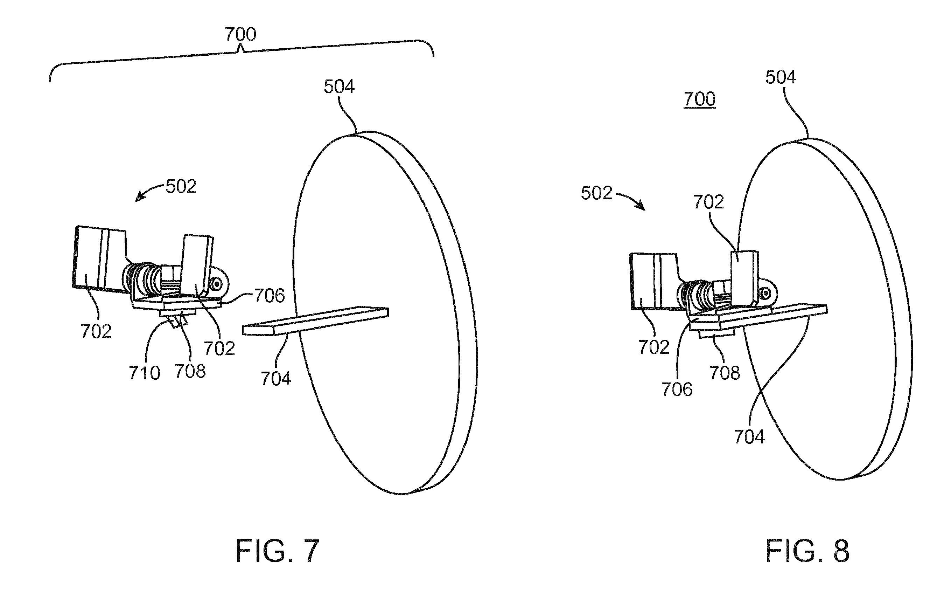

Referring to Figures 7 and 8, wall mount assemblies in accordance with an exemplary embodiment are illustrated. The wall mount assembly 700 includes the hinge assembly 502 and the wall mount 504. The hinge assembly 502 includes one or more hinge mounting plates 702 for coupling the hinge assembly 502 with the mounting plate 300 using one or more coupling means known in the art. For example, an adhesive can permanently couple the hinge mounting plates 702 with the mounting plate 300. Alternatively, one or more fasteners, such as screws, snap in components or welding can secure the hinge mounting plates 702 with the mounting plate 300.

The hinge assembly 502 is detachably coupled with an extender 704 of a wall mount 504. As shown, the hinge assembly 502 includes a first extender plate 706 which can interact with a second extender plate 708 to couple the hinge assembly 502 to the extender 704 via a press fit. More specifically, the extender 704 can reside between the first extender plate 706 and the second extender plate 708. A locking arm 710 can move the second extender plate 708 between an unlocked position and a locked position. Alternatively, other known coupling means can couple the hinge assembly 502 with the extender 704 as known in the art.

The extender 704 extends from a wall mount 504. The extender 704 is integrally formed with the wall mount 504. Alternatively, the extender 704 can be coupled to the wall mount 504 using coupling means known in the art. For example, the extender 704 can pass through a slot in the wall mount 504, or can secure the extender 704 with the wall mount 504 using one or more fasteners such as screws, adhesive or any suitable securement means known in the art.

The wall mount 504 can be secured to a planar surface, such as a wall, using one or more securing means as known in the art. For example, the wall mount 504 can be secured to a planar surface using fasteners such as screws, adhesive or any suitable securing means that secures the wall mount 504 with a substantially planar surface.

Referring to Figure 9, an exploded view of a mountable case assembly in accordance with an exemplary embodiment is illustrated. As shown, the mountable case assembly 900 includes a mountable case 100 having a magnetic plate 130 detachably coupled to a mounting plate 300 which in turn can be detachably coupled to an extender 704 of a wall mount 504 via a hinge assembly 502. The hinge assembly 502 can be detachably coupled to the extender 704. The mounting plate 300 can include a first plate 302 and a second plate 304 with one or more magnetic elements 312 interposed between the two plates 302, 304. The mountable case 100 can be coupled to the mounting plate 300 via magnetically and/or physically via a mount protrusion 120 and corresponding flange retention portions 310.

Referring to Figure 10, an exploded view of a mountable case assembly in accordance with an alternate exemplary embodiment is illustrated. As shown, the mountable case assembly 800 includes a mountable case 100 having a magnetic plate 130 detachably coupled to a mounting plate 300 which in turn can be detachably coupled to an extender 704 of a wall mount 504 via a hinge assembly 502. The hinge assembly 502 can be detachably coupled to the extender 704. In this embodiment, the coupling components are reversed compared to the coupling components in Figure 9. As shown, the magnetic plate 130 can include the alternating flange receiving portions 308 and flange retention portions 310 and the mounting plate 300 can include the mount protrusion 120. As shown, the magnetic plate 130 can include the plurality of magnetic elements 312 extending outwardly and the mounting plate 300 can form the plurality of plate apertures 132. In this embodiment, the magnetic plate 130 is made of a non-magnetic material and includes the magnetic elements 312 with the mounting plate 300 being magnetic. Alternatively, the magnetic plate 130 can include one or more magnetic element covers 314 extending outwardly and can form one or more plate apertures 132 and the mounting plate 300 can include one or more magnetic element covers 314 extending outwardly and can form one or more plate apertures 132.

In one or more embodiments, the magnetic element covers 314 are not used and the magnetic elements 312 can engage with the plate apertures 132.

The embodiments shown and described above are only examples. Therefore, many details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size and arrangement of the parts within the principles of the present disclosure to the full extent indicated by the broad general meaning of the terms used in the attached claims. It will therefore be appreciated that the embodiments described above may be modified within the scope of the appended claims.

## Claims

1. A mountable case assembly (500, 800, 900) for protecting a portable electronic device, comprising:
a mountable case (100) having a front face (104) and a back face (106) with the front face (104) and the back face (106) being opposed to one another, the mountable case (100) configured to receive the portable electronic device;
a mounting plate (300); and
at least one coupling component configured to couple the mountable case (100) with the mounting plate (300), the at least one coupling component including at least one of:
a physical coupling component comprising:
a mount protrusion (120) including one or more flanges (122) extending radially from the mount protrusion (120); and
alternating flange receiving portions (308) and flange retention portions (310), with the flange receiving portions (308) configured to receive the one or more flanges (122) and the flange retention portions (310) configured to secure the one or more flanges (122) when the mountable case (100) is rotated;
wherein the mount protrusion (120) extends outwardly from one of the back face (106) of the mountable case (100) or a front surface of the mounting plate (300) and the flange receiving portions (308) and flange retention portions (310) are formed in one of a magnetic plate (130) coupled to the back face (106) of the mountable case (100) or formed in the mounting plate (300), whichever does not contain the mount protrusion (120);
a magnetic coupling component comprising:
a plurality of plate apertures (132);
a plurality of magnetic elements (312) extending outwardly;
wherein the plurality of plate apertures (132) are formed in one of the magnetic plate (130) or formed in the mounting plate (300) and the plurality of magnetic elements (312) are coupled to one of the magnetic plate (130) or the mounting plate (300), whichever does not contain the plurality of plate apertures (132), with each plate aperture (132) configured to receive a corresponding magnetic element (312).

2. The mountable case assembly (500, 800, 900) of claim 1 wherein there are four flanges (122), four flange receiving portions (308) and four flange retention portions (310).

3. The mountable case assembly (500, 800, 900) of claim 2 wherein each of the flanges (122) is offset ninety degrees from an adjacent flange (122).

4. The mountable case assembly (500, 800, 900) of any of claims 1 - 3 wherein there are four magnetic elements (312) and eight plate apertures (132).

5. The mountable case assembly (500, 800, 900) of claim 4 wherein the eight plate apertures (132) form a substantially circular shape and each plate aperture (132) is offset forty-five degrees from an adjacent plate aperture (132).

6. The mountable case assembly (500, 800, 900) of claim 4 or 5 wherein four of the plate apertures (132) are formed at locations with each of the four plate apertures (132) configured receive one of the magnetic elements (312) when the mountable case (100) is coupled with the mounting plate (300) whereby the mountable case (100) is in a landscape orientation with respect to the mounting plate (300).

7. The mountable case assembly (500, 800, 900) of claim 6 wherein the other four plate apertures (132) are formed at locations with each of the other four plate apertures (132) configured to receive one of the magnetic elements (312) when the mountable case (100) is coupled with the mounting plate (300) whereby the mountable case (100) is in a portrait orientation with respect to the mounting plate (300).

8. The mountable case assembly (500, 800, 900) of any of claims 1 - 7 wherein
the mount protrusion (120) extends outwardly from the back face (106) of the mountable case (100);
the mountable case assembly (500, 800, 900) comprises a magnetic plate (130) coupled to the back face (106) of the mountable case (100), the magnetic plate (130) forming a protrusion aperture (140) from which the mount protrusion (120) extends through; and
the alternating flange receiving portions (308) and flange retention portions (310) are formed in the mounting plate (300).

9. The mountable case assembly (500, 800, 900) of any of claims 1 - 8 wherein
the mounting plate (300) comprising a plurality of magnetic elements (312) extending from a front surface of the mounting plate (300); and
the mountable case assembly (500, 800, 900) comprises a magnetic plate (130) coupled to the back face (106) of the mountable case (100), the plurality of plate apertures (132) are formed in the mounting plate (300) with each plate aperture (132) configured to receive one of the plurality of magnetic elements (312).

10. The mountable case assembly (500, 800, 900) of any of claims 1 - 9 wherein the magnetic plate (300) is a ferromagnetic plate.

11. The mountable case assembly (500, 800, 900) of any of claims 1 - 10 wherein the mounting plate (300) comprises:
a first plate (302) comprising four magnetic element covers (314) extending from an outermost surface of the first plate (302) and configured to receive a magnetic element (312);
a second plate (304) comprising four magnetic element receiving depressions (316);
four magnetic elements (312), each residing in one of the four magnetic element receiving depressions (316) and extending into one of the four magnetic covers (314);
wherein each of the plurality of plate apertures (132) is configured to receive one of the four magnetic element covers (314).

12. The mountable case assembly (500, 800, 900) of any of claims 1 - 11 further comprising a wall mount (504) coupled to the mounting plate (300) and configured to be coupled to a flat surface.

13. The mountable case assembly (500, 800, 900) of any of claims 1 - 12 further comprising a hinge assembly (502) coupled to the mounting plate (300).

14. The mountable case assembly (500, 800, 900) of claim 12 or 13 wherein the wall mount (504) further comprises an extender (704) extending from the wall mount (504) and the hinge assembly (502) is detachably coupled to the extender (704).

15. The mountable case assembly (500, 800, 900) of claim 13 or 14 wherein the hinge assembly (502) is configured to tilt the mountable case (100) with respect to the wall mount (504).
